# FASCICULE DE BREVET EUROPEEN

(11) **EP 3 490 888 B1**
(45) Date de publication et mention de la délivrance du brevet: **22.07.2020**
(21) Numéro de dépôt: 17757793.9
(22) Date de dépôt: 25.07.2017
(51) Int. Cl.: B65B 31/02, B65B 11/50, B65B 11/48, B01D 53/00, A23L 3/3418, B65B 25/06, A23L 3/34, A23L 5/00, B01D 53/22, B01D 63/08

(54) **DISPOSITIF POUR LA MISE SOUS VIDE D'UN PRODUIT, NOTAMMENT UN ALIMENT SOLIDE**
VORRICHTUNG ZUM VAKUUMVERPACKEN EINES PRODUKTES, INSBESONDERE EINES FESTEN NAHRUNGSMITTELS
DEVICE FOR VACUUM-PACKING A PRODUCT, IN PARTICULAR A SOLID FOOD PRODUCT

(30) Priorité: 27.07.2016 FR 1657199
(43) Date de publication de la demande: 05.06.2019
(73) Titulaire: Sergent, Yann, 29880 Guisseny (FR); Guelt, 29300 Quimperle (FR)
(72) Inventeur: SERGENT, Yann, 29880 Guisseny (FR); CLOTEAUX, Anaëlle, 54001 Nancy Cedex (FR)
(74) Mandataire: Cabinet Bleger-Rhein-Poupon
(86) Numéro de dépôt international: PCT/FR2017/052059
(87) Numéro de publication internationale: WO 2018/020134

(56) Documents cités:
- FR-A1- 2 490 076
- FR-A1- 2 568 544
- US-A- 5 887 439

## Description

La présente invention concerne le domaine du conditionnement de produits divers, notamment alimentaires, mais également de type cosmétiques, comme les savons ou les produits de parfumerie.

La présente invention trouvera son application principalement dans le domaine de la mise sous vide ou sous atmosphère modifiée de produits alimentaires en vue d'améliorer leur durée de conservation.

L'invention concerne plus particulièrement un dispositif amélioré pour la mise sous vide ou sous atmosphère modifiée de denrées, notamment alimentaires, permettant d'éviter une évaporation des molécules organoleptiques ou composés organiques volatils (COV) lors de la mise sous vide ou sous atmosphère modifiée.

Notons ici que, bien que la suite de la description s'attache à décrire plus en détails un mode de réalisation en rapport avec le domaine alimentaire, l'invention peut être appliquée à tous les domaines dans lesquels les qualités olfactives et/ou gustatives d'un produit doivent être protégées lors de son conditionnement, et notamment dans le domaine de la cosmétique.

A l'heure actuelle, de nombreux aliments sont commercialisés « sous vide » ou bien « sous atmosphère modifiée ».

Généralement, une mise sous vide d'un aliment consiste à positionner ledit aliment dans un contenant ou emballage souple, notamment en plastique ou en aluminium, par exemple un sac ou sachet, ou encore entre deux films, et à éliminer l'oxygène de celui-ci afin de protéger l'aliment qu'il contient notamment contre l'oxydation de ses composants et le développement de bactéries aérobies susceptibles de dégrader l'aliment.

Plus précisément, l'emballage dans lequel est placé l'aliment est positionné, ouvert, sous une « cloche à vide ». Une pompe à vide enlève l'air dans la cloche à vide et dans ledit emballage. Le vide obtenu est un vide relatif, souvent supérieur à 99%.

L'emballage est ensuite soudé de manière étanche, et la cloche à vide est remise à la pression atmosphérique. La différence de pression entre l'extérieur de l'emballage, qui est à la pression atmosphérique, et l'intérieur de l'emballage (vide partiel supérieur à 99%) entraîne un plaquage du film plastique de l'emballage sur l'aliment.

On connaît également, dans l'état de la technique, le conditionnement de denrées alimentaires dans un contenant plastique sous atmosphère modifiée (également dénommée atmosphère contrôlée ou protectrice), comportant un mélange gazeux présentant une composition contrôlée et différente de celle de l'air ambiant.

Par exemple, pour la conservation de fruits et légumes frais et découpés, on peut utiliser une proportion d'oxygène O₂ abaissée tandis que la proportion de dioxyde de carbone CO₂ dans ledit contenant est accrue, en comparaison avec leurs proportions respectives dans l'air ambiant. Pour les denrées d'origine animale, on utilise en général des gaz neutres, comme l'azote ou le gaz carbonique, en proportions variables selon les aliments.

Lorsque les produits sont conditionnés sous atmosphère modifiée, on cherche à améliorer, par rapport à un conditionnement sous vide, l'aspect et la présentation de ceux-ci. En effet, le produit n'apparaît pas « écrasé » par la pression extérieure à l'emballage, comme cela peut être le cas lors d'une mise sous vide.

On connait ainsi, du document de brevet FR 2 568 544, une machine permettant l'emballage sous vide constituée par une structure contenant, d'un côté, un groupe moteur d'aspiration à pompe à vide placé dans un compartiment séparé et, de l'autre côté du bac inférieur, une machine à sceller.

L'enceinte étanche contient, à sa partie inférieure, un containeur réalisé en une matière ayant une très bonne conductibilité thermique et contenant un fluide présentant des caractéristiques physiques compatibles avec celles d'un produit à mettre sous vide.

Ce dernier est placé dans un emballage et le niveau de vide de l'enceinte est contrôlé, et un gaz neutre, par exemple de l'azote ou du dioxyde de carbone, est injecté dans l'emballage avant scellement.

Cependant, généralement, et comme c'est d'ailleurs le cas dans le document FR 2 568 544 susmentionné, la mise sous atmosphère modifiée d'un aliment suppose également une étape préalable de mise sous vide dudit aliment dans un emballage, avant une injection dans ce dernier d'un gaz ou d'un mélange gazeux de composition contrôlée permettant à la fois une conservation améliorée et un aspect visuel attrayant du produit.

Toutefois, bien que présentant de nombreux avantages, les techniques actuelles de conservation des aliments sous vide, ou sous atmosphère contrôlée, présentent tout de même encore des inconvénients auxquels il convient de remédier.

En particulier, lors de la mise sous vide de produits alimentaires, qu'il s'agisse d'emballer ces produits sous vide ou sous atmosphère modifiée par la suite, une proportion non négligeable d'arômes, responsables de la saveur desdits produits, est susceptible d'être éliminée par aspiration sous l'action de la pompe à vide.

En effet, les arômes, composés aromatiques, ou composés organiques volatils, ou encore molécules ou composés organoleptiques, sont des produits volatils présentant une pression de vapeur saturante relativement élevée. En d'autres termes, les arômes passent facilement à l'état gazeux et sont, par conséquent, fortement susceptibles de s'évaporer lors de la mise sous vide de l'aliment.

Plus spécifiquement, si l'on considère par exemple un aliment comme du jambon, lorsque ce produit est dans un récipient fermé, ses arômes sont en partie dissous dans le produit et, pour l'autre partie, sous forme gazeuse dans l'atmosphère du récipient. Lorsque les deux phases des arômes sont à l'équilibre, la pression partielle d'arôme sous forme gazeuse est proportionnelle à la pression de vapeur saturante de l'arôme à la température du récipient et proportionnelle à la concentration de l'arôme dans le produit. Dans l'hypothèse où le récipient est ouvert, l'évaporation des arômes va se poursuivre étant donné que les pressions partielles d'arômes ne cessent de diminuer, les arômes se diluant progressivement dans l'atmosphère.

En outre, dans le cas de la mise sous vide de l'aliment, d'une part le récipient (emballage plastique par exemple, ou films plastiques séparés) est ouvert, au niveau d'un orifice de communication avec la pompe à vide et, d'autre part, les arômes sous forme gazeuse sont aspirés par la pompe à vide lorsque celle-ci fonctionne. Il en résulte que les arômes qui restaient, jusque-là, dissous dans l'aliment, s'évaporent de celui-ci afin de tenter de rétablir l'équilibre d'arômes entre la phase dissoute et la phase gazeuse. Or, les arômes qui s'évaporent hors de l'aliment sont immédiatement aspirés par la pompe à vide, et ce jusqu'à ce que le pompage soit arrêté.

L'aliment mis sous vide perd alors une partie non négligeable de ses qualités organoleptiques et, en particulier, de sa saveur. C'est d'ailleurs la raison pour laquelle un jambon ou du saumon fumé conservés sous vide ne présentent pas les qualités gustatives d'un produit fraîchement découpé par un traiteur.

Cependant, d'un autre côté, la nécessité de conservation de l'aliment contraint les industriels à une élimination de l'oxygène dans l'emballage, notamment pour éviter une dégradation de l'aliment par oxydation, entraînant par exemple un rancissement des graisses, ou par prolifération de micro-organismes aérobies, bactéries ou levures, susceptibles de dégrader l'aliment et de le rendre impropre à la consommation.

Par conséquent, il est particulièrement important de proposer, notamment aux industriels du domaine de l'agro-alimentaire spécialisés dans la mise sous vide de denrées alimentaires, un dispositif et un procédé permettant une élimination de l'oxygène de l'emballage, tout en conservant une proportion importante d'arômes dissous dans l'aliment mis sous vide dans ledit emballage.

L'invention offre la possibilité de pallier les divers inconvénients de l'état de la technique en proposant notamment un dispositif de mise sous vide d'un aliment permettant, en comparaison avec les dispositifs existants, une rétention substantiellement améliorée des composés organoleptiques volatils responsables de la saveur de l'aliment en question.

A cet effet, la présente invention concerne un dispositif pour la mise sous vide d'un produit, notamment un aliment solide, dans un emballage, notamment un emballage souple, par exemple en plastique, ledit dispositif comprenant une cloche à vide configurée pour recevoir ledit emballage, ou les composants dudit emballage, contenant ledit produit, ladite cloche à vide étant reliée à une pompe à vide apte à faire le vide dans ladite cloche à vide et dans ledit emballage, ledit dispositif étant caractérisé en ce que, entre ladite cloche à vide et ladite pompe à vide, est intercalé au moins un module membranaire comportant une membrane de séparation de gaz séparant un côté rétentat, relié à ladite cloche à vide, d'un côté perméat, relié à ladite pompe à vide.

De manière particulièrement avantageuse, le matériau dont est constituée ladite membrane de séparation de gaz présente une perméabilité à l'oxygène O₂ au moins vingt fois supérieure à sa perméabilité aux composés organoleptiques volatils COV, ladite membrane étant ainsi apte à favoriser la rétention des composés organoleptiques du côté du rétentat et le passage de l'oxygène du côté du perméat.

La présence d'un module membranaire, et notamment d'une membrane de séparation de gaz, intercalé entre la cloche à vide et la pompe à vide, est destinée à permettre une séparation de l'oxygène et des arômes contenus dans un mélange gazeux.

Ledit mélange gazeux d'origine provenant de la cloche à vide, et comportant, entre autres, une certaine proportion de molécules organoleptiques ainsi que de l'oxygène O₂ et de l'azote, arrive dans le module membranaire du dispositif selon l'invention par une des extrémités, ou entrée, dudit module.

Il en résulte la formation de deux mélanges gazeux, le perméat et le rétentat, présentant chacun une composition particulière et différente par rapport à la composition du mélange gazeux d'origine.

Le mélange gazeux appelé « perméat » se retrouve du côté perméat de la membrane, c'est-à-dire qu'il a traversé ladite membrane du module membranaire. Ce perméat, qui est constitué de molécules gazeuses ayant traversé ladite membrane, est un mélange enrichi en oxygène O₂ par rapport au mélange gazeux d'origine.

Le mélange gazeux rétentat reste du côté rétentat de la membrane, autrement dit du côté de la cloche à vide, et n'a pas traversé la membrane du module membranaire. Ce mélange est, quant à lui, dénommé « rétentat » et il est enrichi en arômes et appauvri en oxygène par rapport au mélange gazeux d'origine.

Par conséquent, la présence d'une membrane de séparation de gaz au sein d'un module membranaire permet d'éviter une évaporation et une fuite des composés organoleptiques qui sont présents dans le produit et dans l'atmosphère à proximité de ce produit, en particulier dans l'emballage et dans la cloche à vide.

Plus précisément, par ce moyen, on évite que les pressions partielles des arômes, ou composés organoleptiques, sous forme gazeuse ne chutent dans la cloche à vide. Ces pressions partielles restent suffisamment élevées pour que les composés organoleptiques restent en grande partie dissous dans le produit, notamment lorsque celui-ci consiste en un aliment.

De manière intéressante, ladite membrane de séparation de gaz est configurée pour permettre le passage d'au moins 10⁻⁴ mole d'O₂/s.Pa par m³ de cloche à vide.

Un tel flux de passage au travers de la membrane permet d'abaisser la pression partielle en oxygène O₂ dans la cloche à vide et dans l'emballage au niveau recherché, par exemple inférieure ou égale à 200 Pa, et cela dans un temps relativement court, de l'ordre de 10 à 15 secondes. Ainsi, le procédé reste compatible avec les contraintes industrielles de fonctionnement de la chaîne de conditionnement notamment des aliments.

Tout particulièrement, ladite membrane de séparation de gaz peut être une membrane en polytétrafluoroéthylène, tel que du téflon AF 2400, Téflon étant une marque déposée et désignant le polytétrafluoroéthylène, ou une membrane en poly(4-méthyl-1-pentène).

Plus préférentiellement encore, ladite membrane de séparation de gaz est une membrane en PPO ou poly (oxyde de phénylène).

Des tests conduits au moyen de ces membranes de séparation de gaz ont permis de démontrer que de telles compositions de membrane sont particulièrement intéressantes pour une élimination rapide de l'oxygène de la cloche à vide.

De manière intéressante, il est envisageable de compléter le dispositif en y intégrant un moyen de chauffage du module membranaire.

Ce moyen de chauffage a pour fonction de diminuer la sorption des molécules d'arômes au niveau de la surface de la membrane côté rétentat tout en permettant de favoriser, et même d'accélérer, le passage de l'oxygène du côté perméat de la membrane. On diminue ici encore la surface de membrane, donc l'investissement nécessaire, pour un même temps de mise sous vide.

Le présent dispositif peut encore comprendre un récipient comportant des composés organoleptiques, sous forme d'un bouillon aromatique ou de résidus du produit solide qui doit être mis sous vide, ledit récipient étant raccordé au moins à ladite cloche à vide.

Dans ce cas de figure, il est envisageable que le dispositif de l'invention intègre un moyen de chauffage dudit récipient comportant les composés organoleptiques, permettant de le maintenir à une température supérieure à celle du produit à conditionner.

De préférence, la température du récipient comportant les composés organoleptiques est de 1 à 10°C supérieure, de préférence de 3 à 7°C supérieure, par rapport à la température du produit à conditionner.

La présence d'un bouillon aromatique a pour fonction d'éviter une évaporation des arômes contenus dans le produit, notamment l'aliment, qui doit être mis sous vide. En effet, dans ce cas de figure, les arômes et autres molécules, telles que l'eau par exemple, seront d'abord libérés à partir du récipient contenant le bouillon, et non à partir de l'aliment à conditionner.

Dans un mode de réalisation avantageux, le dispositif selon l'invention comporte au moins un compresseur inséré entre ladite cloche à vide et le module membranaire, ladite cloche, ledit module et ledit compresseur étant reliés sur une boucle de circulation du mélange gazeux.

L'insertion d'un compresseur sur le circuit de circulation des gaz, entre la cloche à vide et le module membranaire, de préférence en amont dudit module en tenant compte de la boucle de circulation des gaz, permet de diminuer la surface de membrane nécessaire à la séparation O₂/composés organoleptiques, ce qui entraîne incidemment une baisse des coûts inhérents à l'investissement dans ces membranes.

La présente invention comporte de nombreux avantages. En particulier, au moyen du dispositif mis au point, on diminue considérablement la perte des composés organoleptiques, ou arômes, responsables de la saveur d'un aliment ou de l'odeur d'un produit, lorsque ce dernier subit une étape de mise sous vide.

Par conséquent le dispositif permet de faciliter la conservation des produits, et plus particulièrement des aliments, ces derniers étant conditionnés sous vide ou sous atmosphère contrôlée protectrice, à l'abri de l'oxydation, tout en conservant les qualités organoleptiques de ces aliments.

En outre, ce dispositif est tout à fait compatible avec une utilisation à l'échelle industrielle. En effet, des tests effectués ont permis de démontrer que, en plus de la rétention des arômes, ledit dispositif permet une élimination rapide de l'oxygène, dans un temps de l'ordre de 10 à 15 secondes, voire inférieur si les surfaces de membranes sont augmentées, répondant ainsi aux contraintes imposées dans le secteur.

On peut ajouter que ce dispositif permet de se satisfaire d'une pression totale moins basse, autrement dit d'un vide relatif plus faible, à l'arrêt du pompage sous vide. En effet la pression partielle d'oxygène résiduelle est le critère déterminant du niveau de vide nécessaire pour la conservation du produit, or elle baisse plus vite que la pression partielle d'azote, donc aussi que la pression totale. L'écrasement du produit dans l'emballage après la mise à l'atmosphère est donc diminué dans le cas de l'emballage sous vide. Dans le cas de la mise sous atmosphère modifiée, l'azote résiduel sera mélangé dans le mélange gazeux introduit.

D'autres caractéristiques et avantages de l'invention ressortiront de la description détaillée qui va suivre des modes de réalisation non limitatifs de l'invention, en référence aux figures annexées dans lesquelles :

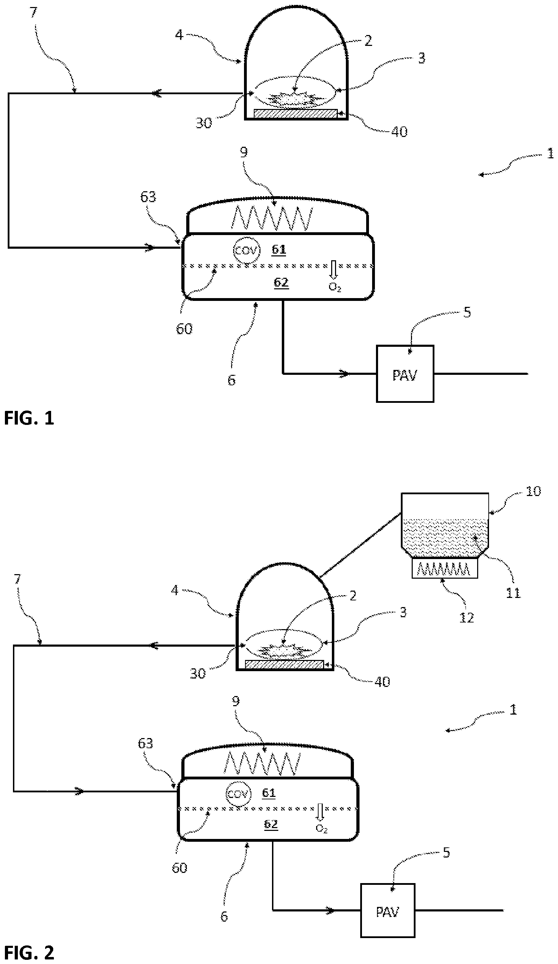

- la figure 1 représente, de manière schématique, un premier exemple de réalisation du dispositif de mise sous vide d'un produit selon l'invention, dans lequel le module membranaire est monté en utilisation frontale, également appelée « dead-end », avec une entrée côté rétentat et une sortie côté perméat;
- la figure 2 représente, de manière schématique, un deuxième exemple de réalisation du dispositif de mise sous vide d'un produit selon l'invention, similaire au premier exemple de la figure 1, à l'exception de l'ajout d'un récipient comportant des arômes relié à la cloche à vide ;

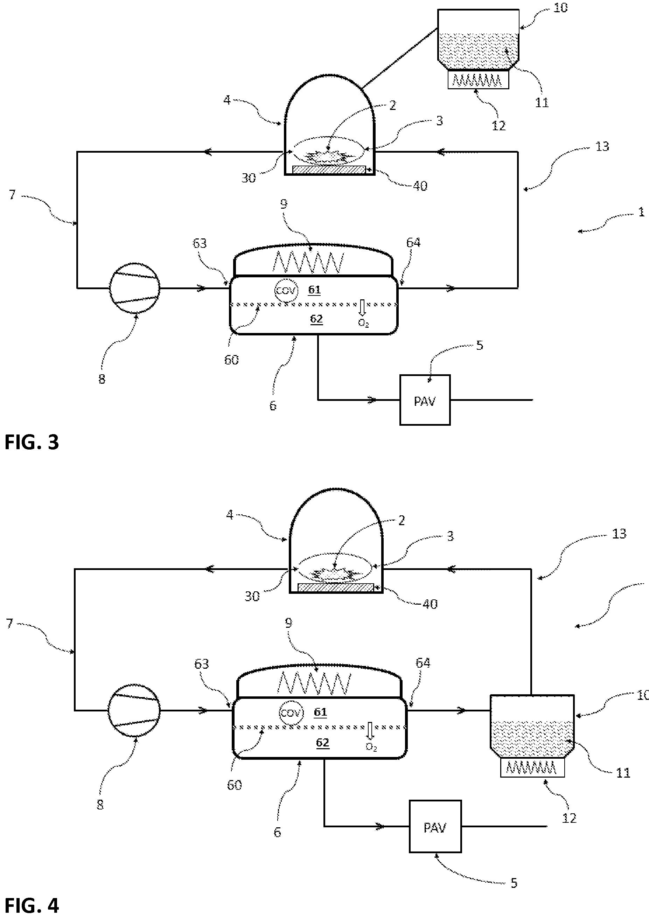

- la figure 3 représente, de manière schématique, un troisième exemple de réalisation du dispositif de mise sous vide d'un produit selon l'invention, avec une entrée et une sortie côté rétentat, ainsi qu'une sortie côté perméat du module membranaire, et dans lequel dispositif un compresseur est positionné sur une boucle de circulation des gaz, entre la cloche à vide et le module membranaire, ledit compresseur étant monté en utilisation tangentielle (ou en « cross-flow »), ledit dispositif comportant en outre un récipient comportant des arômes et relié seulement à la cloche à vide ;
- la figure 4 représente, de manière schématique, un quatrième exemple de réalisation du dispositif de mise sous vide d'un produit selon l'invention, dans lequel le récipient comportant des arômes est positionné, sur la boucle de circulation des gaz, entre le module membranaire et la cloche à vide et un compresseur, monté comme dans la figure 3, est positionné sur ladite boucle, entre la cloche à vide et le module membranaire.

A titre de remarque préliminaire, il sera utilisé, dans la suite de la description, les termes arômes, composés aromatiques, composés organiques volatils, molécules aromatiques, molécules organoleptiques ou composés organoleptiques volatil(e)s, abrégés COV, afin de désigner les molécules de taille moyennes (essentiellement entre 100 et 400 daltons), qui sont présentes dans le produit de départ à conditionner, consistant notamment en un aliment, et responsables de la saveur et/ou de l'odeur dudit produit.

Telle que représentée sur les figures 1 à 4, la présente invention concerne un dispositif 1 pour la mise sous vide d'un produit 2, celui-ci consistant, par exemple, en un aliment 2.

Cet aliment 2 est de préférence un aliment solide, et peut consister en un produit charcutier comme du jambon, en un fromage, en un produit de saurisserie, comme du saumon fumé, ou tout autre produit pouvant être mis sous vide.

Le dispositif 1 de l'invention est particulièrement indiqué dans le cas de la mise sous vide d'aliments 2 ayant une grande surface par rapport à leur volume, par exemple des aliments 2 proposés sous la forme de tranches fines, râpée ou en poudre.

Le dispositif 1 de mise sous vide d'un aliment 2 selon l'invention peut aussi bien être utilisé pour traiter un aliment 2 qui doit être, par la suite, maintenu sous vide dans un emballage souple 3, par exemple en plastique et/ou en aluminium, que pour un aliment 2 qui doit être conditionné sous atmosphère modifiée. Dans ce dernier cas de figure, l'aliment 2 est, dans un premier temps, mis sous vide au moyen du présent dispositif 1, par exemple entre deux feuilles d'un film, notamment en plastique et/ou en aluminium, avant l'injection d'un gaz ou d'un mélange gazeux de composition contrôlée dans ledit emballage 3 qui est, dans ce cas, constitué par la soudure des deux feuilles.

Ainsi, par exemple, selon les modes de réalisation non limitatifs illustrés sur les figures 1 à 4, ledit aliment 2 est placé dans un emballage 3 présentant une ouverture 30, lui-même positionné au sein d'une cloche à vide 4 qui consiste en une enceinte close.

L'emballage 3 contenant l'aliment 2 peut être posé, par exemple, directement sur la base de ladite cloche 4 ou sur un moyen support 40.

Cette cloche à vide 4 est reliée, par exemple via une tuyauterie 7 adaptée, à une pompe à vide 5.

Ladite pompe 5 doit permettre d'abaisser la pression dans la cloche 4, c'est-à-dire d'extraire l'air et notamment l'oxygène O₂ présent dans la cloche 4 et, par extension, dans l'emballage 3 contenant l'aliment 2.

La particularité du dispositif 1 selon l'invention est qu'il incorpore, entre la cloche à vide 4 et la pompe à vide 5, au moins un module membranaire 6.

Ainsi, de préférence, et comme illustré sur les figures 1 à 4 jointes, le mélange gazeux, provenant de la cloche à vide 4 et aspiré au moyen de la pompe à vide 5 passe au travers du module membranaire 6, les flèches représentées sur les figures symbolisant le cheminement du mélange gazeux dans le dispositif 1 de l'invention.

Dans les modes de réalisation particuliers des figures 3 et 4, une fois que le mélange gazeux est passé au travers du module 6, une partie de celui-ci revient vers ladite cloche 4 au moyen d'une boucle 13 de circulation dudit mélange, comme détaillé ci-après dans la description.

Pour en revenir à présent audit module membranaire 6, celui-ci consiste en une unité comprenant une certaine surface d'une membrane de séparation de gaz 60, représentée sur les figures jointes.

Ladite membrane de séparation de gaz 60 permet, dans le module membranaire 6, de séparer un côté rétentat 61 dudit module 6, qui se situe du côté de la cloche à vide 4, d'un côté perméat 62, qui se situe du côté de la pompe à vide 5.

De manière particulièrement avantageuse, la membrane de séparation de gaz 60 du module 6 permet un passage des molécules d'oxygène O₂ du côté du perméat 62, tandis que les composés organoleptiques volatils, notés COV, sont retenus au moins en partie du côté du rétentat 61, comme cela est illustré sur les figures.

Ainsi, à l'issue du passage du mélange gazeux d'origine provenant de la cloche à vide 4 dans le module 6, on obtient deux mélanges gazeux de compositions différentes : le perméat, qui a traversé la membrane 60 et est enrichi en oxygène O₂ par rapport au mélange initial, et le rétentat qui reste dans le module membranaire 6, côté cloche à vide 4, enrichi en composés organoleptiques COV et appauvri en oxygène O₂.

Le passage des molécules gazeuses au travers de ladite membrane 60 s'effectue par sorption desdites molécules sur ladite membrane 60, du côté rétentat 61, puis par diffusion au travers de ladite membrane 60, et enfin par désorption du côté aval de la membrane 60, autrement dit côté perméat 62.

La perméabilité du matériau d'une membrane de séparation de gaz 60 vis-à-vis d'une molécule gazeuse est le produit de la solubilité de ladite molécule dans ledit matériau par son coefficient de diffusion dans ledit matériau. Généralement, la solubilité augmente avec la taille de la molécule, alors que le coefficient de diffusion, donc la vitesse de diffusion, diminue lorsque la taille des molécules augmente.

Les molécules d'oxygène O₂ sont considérées comme présentant une petite taille, tandis que les molécules organoleptiques COV ont une taille plus importante, par exemple, que les molécules d'oxygène O₂, d'eau H₂0, ou encore d'azote N₂.

En plus du critère de taille, il y a des caractéristiques propres aux molécules qui influent sur le passage de celles-ci au travers d'une membrane. Par exemple, l'oxygène O₂ et l'eau H₂0 sont des molécules considérées comme étant rapides, alors que l'azote N₂, qui est également une petite molécule, est plus lent.

La membrane de séparation de gaz 60 mise en œuvre dans le dispositif 1 selon la présente invention présente donc, de manière toute préférentielle, une perméabilité importante vis-à-vis de l'oxygène O₂ et, au contraire, une perméabilité la plus faible possible vis-à-vis des composés organoleptiques volatils COV.

En outre, il est particulièrement avantageux que les composés organoleptiques COV aient une solubilité, dans la membrane de séparation de gaz 60, aussi basse que possible, afin d'éviter que lesdits composés COV ne soient sorbés à la surface de ladite membrane 60, côté rétentat 61.

En effet, la sorption de ces composés COV à la surface de ladite membrane 60 est susceptible d'engendrer une diminution de la pression partielle en arômes COV dans la cloche à vide 4, et, par conséquent, une évaporation d'arômes à partir de l'aliment 2 et une diminution des qualités organoleptiques de ce dernier.

En ce qui concerne les molécules d'eau H₂O, celles-ci présentent une taille relativement petite et ont une perméabilité élevée dans de nombreux matériaux. Ainsi, tout comme l'oxygène, de l'eau va traverser la membrane 60 du dispositif 1 de l'invention et être évacuée du côté perméat 62.

Dans un mode de réalisation particulièrement avantageux, ladite membrane de séparation de gaz 60 présente une perméabilité à l'oxygène O₂ au moins vingt fois supérieure à la perméabilité de ladite membrane 60 à chacun des composés organoleptiques COV susceptibles d'entrer dans la composition du mélange gazeux d'origine. La membrane 60 présente donc une sélectivité O₂/COV supérieure ou égale à vingt.

Par ce moyen, la rétention des molécules organoleptiques COV du côté rétentat 61 est optimale, tandis que l'oxygène O₂ passe aisément au travers de la membrane 60 pour être évacué en aval de celle-ci, côté perméat 62, lors de la mise sous vide par le dispositif 1.

Ainsi, la membrane 60 du dispositif 1 de l'invention présente une perméabilité à l'oxygène O₂ supérieure à sa perméabilité aux composés organoleptiques COV. Cependant, ladite membrane 60 n'est pas totalement imperméable à ces molécules d'arômes. En effet, il suffit que la membrane 60 adsorbe suffisamment peu de ces molécules pour empêcher que la pression partielle en arômes ne diminue de manière trop importante au sein de la cloche à vide 4, ce qui serait à l'origine d'une évaporation d'arômes dissous dans l'aliment 2.

La membrane de séparation de gaz 60, caractérisée par le matériau qui la compose, son épaisseur et sa surface, doit donc laisser passer assez vite l'oxygène, par exemple plus de 10⁻⁴ mole d'O₂/s.Pa par m³ de cloche à vide et avoir une sélectivité suffisante de l'oxygène par rapport aux COV, par exemple plus de 20.

Ainsi, ledit matériau de la membrane de séparation de gaz 60 peut consister en du Téflon AF 2400, Téflon étant une marque déposée et désignant le polytétrafluoroéthylène, ou en du poly(4-méthyl-1-pentène) .

Tout préférentiellement, ladite membrane de séparation de gaz est une membrane en PPO pour poly (oxyde de phénylène), un matériau polymère appartenant à la famille des polyaryléthers ou polyéther aromatiques (PAE) .

Selon un mode de réalisation particulier du dispositif 1 de mise sous vide d'un aliment solide 2, le module membranaire 6, incorporant ladite membrane 60, est associé à un moyen de chauffage 9.

L'intégration d'un tel moyen de chauffage 9 a pour objectif une augmentation de la température au sein du module 6, afin de minimiser la sorption des composés organoleptiques COV à la surface de la membrane 60.

En effet, le phénomène de sorption d'une molécule sur une surface peut être décomposé en condensation, puis dilution. Or, la condensation s'effectue plus aisément sur une surface froide que sur une surface chaude. Une augmentation de la température au sein du module 6 peut donc diminuer la condensation des molécules COV à la surface de la membrane 60, côté rétentat 61 et, par conséquent, leur sorption.

En outre, l'oxygène O₂ traverse plus rapidement la membrane de séparation de gaz 60 lorsque la température dans le module 6 est augmentée, ce qui diminue le temps d'un cycle nécessaire à la mise sous vide de l'aliment 2.

Tout préférentiellement, et comme illustré notamment sur la figure 2, dans le but de diminuer encore l'évaporation de composés organoleptiques COV de l'aliment 2, un récipient 10 incorporant des arômes en grande quantité, peut être raccordé à la cloche à vide 4.

Ainsi, dans un premier exemple de réalisation, représenté sur la figure 2, un tel récipient 10 peut être directement connecté à ladite cloche à vide 4.

En ce qui concerne à présent le contenu dudit récipient 10, il peut s'agir d'un bouillon liquide aromatique 11.

A titre d'exemple non limitatif, on peut citer un bouillon 11 qui a servi à la cuisson préalable de l'aliment 2 qui doit être mis sous vide, notamment dans le cas du jambon.

Pour d'autres types d'aliments 2, il pourrait s'agir de chutes qui ont été produites lors de la préparation et de la découpe de l'aliment 2 en question, par exemple dans le cas de saumon fumé.

La présence d'un tel récipient 10 comprenant des composés organoleptiques doit permettre de privilégier, le cas échéant, une évaporation de ces composés à partir du contenu du récipient 10 et non à partir de l'aliment 2 qui doit être conditionné sous vide. En d'autres termes, l'atmosphère de la cloche à vide 4 va être saturée de molécules aromatiques provenant de ce récipient 10.

Le récipient 10 dans lequel on retrouve un mélange d'arômes est associé à un moyen de chauffage 12 qui permet un maintien dudit récipient 10 à une température légèrement supérieure à la température de l'aliment 2 à conditionner.

Ainsi, la température au sein du récipient 10 est plus élevée, par exemple de 1 à 10°C et, de préférence, de 3 à 7°C, par rapport à la température de l'aliment 2 placé dans la cloche à vide 4.

Une telle différence de température entre les deux éléments du dispositif 1 facilite l'évaporation des composés organoleptiques COV à partir du récipient 10 en lieu et place des composés COV qui sont dissous dans l'aliment 2 à conditionner.

En effet, les pressions de vapeur saturante augmentent avec la température. Par conséquent, les composés organoleptiques COV auront tendance à s'échapper davantage du récipient 10 si celui-ci est maintenu à une température plus élevée que celle du contenu de la cloche 4.

Afin d'améliorer encore le dispositif 1 de mise sous vide de l'invention, le demandeur a imaginé y intégrer au moins un compresseur 8, notamment lorsque le mélange gazeux décrit une boucle 13 de circulation, comme illustré sur les figures 3 et 4.

Un tel compresseur 8 est, de préférence, positionné entre la cloche à vide 4 et le module membranaire 6 et, plus préférentiellement encore, en amont du module membranaire 6 tenant compte du cheminement du mélange gazeux symbolisé par les flèches sur les figures, celui-ci décrivant alors une boucle de circulation 13.

La présence d'un compresseur 8, en particulier entre le module 6 et la cloche à vide 4, en amont dudit module 6, améliore les conditions hydrodynamiques dans ledit module 6, notamment dans la partie amont dudit module 6, c'est-à-dire côté rétentat 61.

En effet, l'entretien d'un flux dynamique de gaz au moyen dudit compresseur 8, côté rétentat 61, permet une meilleure utilisation de l'ensemble de la surface de la membrane de séparation de gaz 60 positionnée dans le module 6. Cela est dû au fait que le compresseur 8 permet d'éviter que la partie de la membrane 60 localisée à proximité de la sortie 64 du rétentat 61, toujours tenant compte de la boucle de circulation des gaz 13, ne soit sous utilisée car en contact permanent avec un mélange de molécules gazeuses déjà appauvri en oxygène O₂, celui-ci étant éliminé principalement dans une première portion du module membranaire 6, proche de l'entrée 63 du rétentat 61.

En outre, placé en amont du module membranaire 6, le compresseur 8 entraîne une élévation de la pression dans la partie amont dudit module 6, donc favorise le passage des molécules d'oxygène O₂ au travers de la membrane 60. En effet, c'est la différence de pression partielle entre les deux faces 61 et 62 de la membrane 60 qui est la force motrice qui permet le passage des molécules de gaz.

Dans le mode de réalisation représenté sur les figures 3 et 4, où le dispositif 1 de l'invention incorpore un compresseur 8 sur une boucle 13 de circulation du gaz, ledit dispositif 1 comprend également, de préférence, un récipient 10 incorporant des arômes en grande quantité, comme déjà évoqué précédemment en référence à la figure 2.

Ainsi, dans un premier exemple, représenté sur la figure 3, un tel récipient 10 peut être directement et uniquement connecté à ladite cloche à vide 4, sans être placé sur le circuit 13 de gaz.

Dans un second exemple représenté sur la figure 4, le récipient 10 peut être intercalé entre le module membranaire 6 et la cloche à vide 4, plus particulièrement en aval dudit module 6 et donc de la pompe à vide 5, considérant le circuit 13 emprunté par les gaz.

Le dispositif 1 de l'invention mis au point par le demandeur est particulièrement intéressant. Les qualités gustatives et organoleptiques, la saveur et l'odeur d'un produit conditionné sous vide ou sous atmosphère contrôlée sont conservées. D'un autre côté, l'oxygène est éliminé de l'emballage. Ainsi, la détérioration du produit par oxydation est évitée.

Bien entendu, l'invention n'est pas limitée aux exemples illustrés et décrits précédemment qui peuvent présenter des variantes et modifications sans pour autant sortir du cadre de l'invention, notamment en ce qui concerne les types de produits auxquels peut être appliqué le présent dispositif 1.

## Revendications

1. Dispositif (1) pour la mise sous vide d'un produit (2) dans un emballage (3), ledit dispositif (1) comprenant une cloche à vide (4) configurée pour recevoir ledit emballage (3), ou les composants dudit emballage (3), contenant ledit produit (2), ladite cloche à vide (4) étant reliée à une pompe à vide (5) apte à faire le vide dans ladite cloche à vide (4) et dans ledit emballage (3), ledit dispositif (1) étant **caractérisé en ce que**, entre ladite cloche à vide (4) et ladite pompe à vide (5), est intercalé au moins un module membranaire (6) comportant une membrane de séparation de gaz (60) séparant un côté rétentat (61), relié à ladite cloche à vide (4), d'un côté perméat (62), relié à ladite pompe à vide (5) .

2. Dispositif (1) selon la revendication 1 **caractérisé en ce que** le matériau de ladite membrane de séparation de gaz (60) présente une perméabilité à l'oxygène (O₂) au moins vingt fois supérieure à sa perméabilité aux composés organoleptiques volatils (COV), ladite membrane (60) étant ainsi apte à favoriser la rétention des composés organoleptiques (COV) du côté du rétentat (61) et le passage de l'oxygène (O₂) du côté du perméat (62).

3. Dispositif (1) selon l'une quelconque des revendications 1 ou 2 **caractérisé en ce que** le matériau de ladite membrane de séparation de gaz (60) est configuré pour permettre le passage d'au moins 10⁻⁴ mole d'O₂/s.Pa par m³ de cloche à vide (4).

4. Dispositif (1) selon l'une quelconque des revendications 1 à 3 **caractérisé en ce que** ladite membrane de séparation de gaz (60) est une membrane en polytétrafluoroéthylène, tel que du téflon AF 2400, ou une membrane en poly(4-méthyl-1-pentène).

5. Dispositif (1) selon l'une quelconque des revendications 1 à 3 **caractérisé en ce que** ladite membrane de séparation de gaz est une membrane en poly (oxyde de phénylène).

6. Dispositif (1) selon l'une quelconque des revendications 1 à 5 **caractérisé en ce qu'**il comporte un moyen de chauffage (9) dudit module membranaire (6).

7. Dispositif (1) selon l'une quelconque des revendications 1 à 6 **caractérisé en ce qu'**il comporte un récipient (10) comportant des composés organoleptiques, sous forme d'un bouillon aromatique ou de résidus du produit (2) qui doit être mis sous vide, ledit récipient (10) étant raccordé au moins à ladite cloche à vide (4).

8. Dispositif (1) selon la revendication précédente **caractérisé en ce qu'**il comporte un moyen de chauffage (12) dudit récipient (10) comportant les arômes, de manière à maintenir ledit récipient (10) à une température supérieure de 1 à 10°C, de préférence supérieure de 3 à 7°C, à la température du produit (2) dans la cloche à vide (4).

9. Dispositif (1) selon l'une quelconque des revendications 1 à 8 **caractérisé en ce qu'**il comporte au moins un compresseur (8) inséré entre ladite cloche à vide (4) et le module membranaire (6), ladite cloche (4), ledit module (6) et ledit compresseur (8) étant reliés sur une boucle (13) de circulation du mélange gazeux.

10. Dispositif (1) selon l'une quelconque des revendications 1 à 9 pour la mise sous vide d'un aliment solide (2).

## Patentansprüche

1. Vorrichtung (1) zum unter Vakuum Setzen eines Produkts (2) in einer Verpackung (3), wobei die besagte Vorrichtung (1) eine Vakuumglocke (4) umfasst, die konfiguriert ist, um die besagte Verpackung (3), oder die Komponenten der besagten Verpackung (3), aufzunehmen, die das besagte Produkt (2) enthält, wobei die besagte Vakuumglocke (4) mit einer Vakuumpumpe (5) verbunden ist, die geeignet ist, die besagte Vakuumglocke (4) und die besagte Verpackung (3) unter Vakuum zu bringen, wobei die besagte Vorrichtung (1) **dadurch gekennzeichnet ist, dass** zwischen der besagten Vakuumglocke (4) und der besagten Vakuumpumpe (5) mindestens ein Membranmodul (6) angeordnet ist, das eine Gastrennmembran (60) umfasst, die eine Retentatseite (61), die mit der besagten Vakuumglocke (4) verbunden ist, von einer Permeatseite (62), die mit der besagten Vakuumpumpe (5) verbunden ist, trennt.

2. Vorrichtung (1) nach Anspruch 1, **dadurch gekennzeichnet, dass** das Material der besagten Gastrennmembran (60) eine Sauerstoffdurchlässigkeit (O₂) aufweist, die mindestens zwanzigmal höher ist als seine Durchlässigkeit für flüchtige organoleptische Verbindungen (VOCs), wobei die besagte Membran (60) also geeignet ist, die Retention der organoleptischen Verbindungen (VOCs) auf der Seite des Retentats (61) und den Durchgang von Sauerstoff (O₂) auf der Seite des Permeats (62) zu fördern.

3. Vorrichtung (1) nach irgendeinem der Ansprüche 1 oder 2, **dadurch gekennzeichnet, dass** das Material der besagten Gastrennmembran (60) konfiguriert ist, um den Durchgang von mindestens 10⁻⁴ Mol O₂/s.Pa pro m³ Vakuumglocke (4) zu erlauben.

4. Vorrichtung (1) nach irgendeinem der Ansprüche 1 bis 3, **dadurch gekennzeichnet, dass** die Gastrennmembran (60) eine Membran aus Polytetrafluorethylen, wie Teflon AF 2400, oder eine Membran aus Poly(4-Methyl-1-Penten) ist.

5. Vorrichtung (1) nach irgendeinem der Ansprüche 1 bis 3, **dadurch gekennzeichnet, dass** die Gastrennmembran eine Membran aus Poly(Phenylenoxid) ist.

6. Vorrichtung (1) nach irgendeinem der Ansprüche 1 bis 5, **dadurch gekennzeichnet, dass** sie ein Heizmittel (9) für das besagte Membranmodul (6) umfasst.

7. Vorrichtung (1) nach irgendeinem der Ansprüche 1 bis 6, **dadurch gekennzeichnet, dass** sie einen Behälter (10) umfasst, der organoleptische Verbindungen in Form einer aromatischen Brühe oder von Restes des Produkts (2), die unter Vakuum gesetzt werden müssen, umfasst, wobei der besagte Behälter (10) mindestens mit der besagten Vakuumglocke (4) verbunden ist.

8. Vorrichtung (1) nach dem vorhergehenden Anspruch, **dadurch gekennzeichnet, dass** sie ein Heizmittel (12) für den, die Aromen umfassenden Behälter (10) umfasst, sodass der Behälter (10) auf einer Temperatur gehalten wird, die 1 bis 10°C, vorzugsweise 3 bis 7°C höher ist als die Temperatur des Produkts (2) in der Vakuumglocke (4).

9. Vorrichtung (1) nach irgendeinem der Ansprüche 1 bis 8, **dadurch gekennzeichnet, dass** sie mindestens einen Kompressor (8) umfasst, der zwischen der besagten Vakuumglocke (4) und dem Membranmodul (6) eingefügt ist, wobei die besagte Glocke (4), das besagte Modul (6) und der besagte Kompressor (8) in einer Umlaufschleife (13) für das Gasgemisch verbunden sind.

10. Vorrichtung (1) nach irgendeinem der Ansprüche 1 bis 9 zum unter Vakuum Setzen eines festen Lebensmittels (2).

## Claims

1. Device (1) for putting a product (2) under vacuum in a packaging (3), said device (1) comprising a vacuum bell (4) configured to receive said packaging (3), or the components of said packaging (3), containing said product (2), said vacuum bell (4) being connected to a vacuum pump (5) capable of creating the vacuum in said vacuum bell (4) and in said packaging (3), said device (1) being **characterized in that** between said vacuum bell (4) and said vacuum pump (5) is interposed at least one membrane module (6) including a gas-separating membrane (60) separating a retentate side (61), connected to said vacuum bell (4), from a permeate side (62) connected to said vacuum pump (5).

2. Device (1) according to claim 1, wherein the material of said gas-separating membrane (60) has a permeability to oxygen (O₂) at least twenty times higher than its permeability to volatile organoleptic compounds (VOCs), said membrane (60) thus being capable of promoting the retention of organoleptic compounds (VOCs) on the side of the retentate (61) and the passing through of oxygen (O₂) on the side of the permeate (62).

3. Device (1) according to any one of claims 1 or 2, wherein the material of said gas-separating membrane (60) is configured to permit the passing through of at least 10⁻⁴ mole of O₂/s.Pa per m³ of vacuum bell (4).

4. Device (1) according to any one of claims 1 to 3, wherein said gas-separating membrane (60) is a membrane made of polytetrafluoroethylene, such as Teflon AF 2400, or a membrane made of (poly)4-methyl-1-pentene.

5. Device (1) according to any one of claims 1 to 3, wherein said gas-separating membrane is a membrane made of (poly)phenylene oxide.

6. Device (1) according to any one of claims 1 to 5, wherein it comprises a means for heating (9) said membrane module (6).

7. Device (1) according to any one of claims 1 to 6, wherein it comprises a container (10) including organoleptic compounds, in the form of an aromatic broth or residues of the product (2), which must be put under vacuum, said container (10) being connected at least to said vacuum bell (4).

8. Device (1) according to the preceding claim, wherein it includes a means for heating (12) said container (10) including the aromas, so as to maintain said container (10) at a temperature of 1 to 10°C, preferably of 3 to 7°C, higher than the temperature of the product (2) in the vacuum bell (4).

9. Device (1) according to any one of claims 1 to 8, wherein it includes at least one compressor (8) inserted between said vacuum bell (4) and the membrane module (6), said bell (4), said module (6) and said compressor (8) being connected on a circulation loop (13) for the gas mixture.

10. Device (1) according to any one of claims 1 to 9 for putting a solid food (2) under vacuum.
